Europäisches Patentamt

European Patent Office

Office européen des brevets

(11) Publication number: **0 454 919 A1**

# EUROPEAN PATENT APPLICATION

(21) Application number: 90304845.2

(22) Date of filing: 03.05.90

(51) Int. Cl.⁵: **B60S 1/48**

(43) Date of publication of application:
06.11.91 Bulletin 91/45

(84) Designated Contracting States:
AT BE CH DE DK ES FR GB GR IT LI LU NL SE

(71) Applicant: Wong, Cheng-Ming
493 Guang Tsae Street
Chiayi City(TW)

(72) Inventor: Wong, Cheng-Ming
493 Guang Tsae Street
Chiayi City(TW)

(74) Representative: Abbie, Andrew Kenneth et al
R.G.C. Jenkins & Co. 26 Caxton Street
London SW1H 0RJ(GB)

(54) Water warming device for car windshield cleaning.

(57) A water warming device for car windshield cleaning comprising a heat exchanging tank (4) connected between the engine (1) and the radiator (2) with tubes (3) and a heat absorbing tube (41) fixed helically in said tank (4) for the cleaning water to flow through said tank (4) receiving the heated water from the engine (1) and temporarily accumulating it for the heat absorbing tube (41) to absorb the heat from said heated water, warming up the cleaning water to be shot out of a nozzle (7) to the windshield by a water pump (6), and then the heated water being sent from the tank (4) back to the radiator (2).

FIG.1

EP 0 454 919 A1

BACKGROUND OF THE INVENTION

So far, a water warming device known utilizes a heater using PTC (Positive Temperature Coefficient) resistances for warming up the car windshield cleaning water so that snow or frozen ice on the car windshield can be disolved in a cold region. But the heater has to consume the power of the battery in a car.

SUMMARY OF THE INVENTION

The object of this invention is to provide a water warming device for car windshield cleaning, utilizing the heat of the water coming out of the engine and circulating from the radiator for cooling the engine, without using an electric heater mentioned above.

The water warming device for car windshield cleaning in the present invention comprises a heat exchanging tank and a heat absorbing tube as a main components.

The heat exchanging tank is arranged to be connected between the engine and the radiator in a car with tubes, receiving the heated water coming out of the engine in its interior, accumulating it temporarily to warm up the heat absorbing tube fixed helically in the tank and sending it back to the radiator which the cooling water first flows out of and then circulates in the engine for cooling and being heated up therein.

The heat absorbing tube is fixed helically in the interior of the heat exchanging tank, through which the heated water coming out of the engine flows. The heat absorbing tube is connected at one end with a cleaning water container and at the other end with a water pump so that the cleaning water in said container can be sucked to flow through said tube and then to be shot out of a nozzle on the windshield. And while the cleaning water flows through said tube, it can be warmed up by said tube absorbing heat from the heated water temporarily accumulated in said tank.

BRIEF DESCRIPTION OF THE DRAWINGS

This invention will now be described in detail with reference to accompanying drawings wherein:
Figure 1 is a perspective view of the water warming device for car windshield cleaning in the present invention;
Figure 2 is an elevational view of the water warming device for car windshield cleaning in the present invention;
Figure 3 is a cross-sectional view taken along line 3-3 of Figure 2.

DETAILED DESCRIPTION OF THE INVENTION

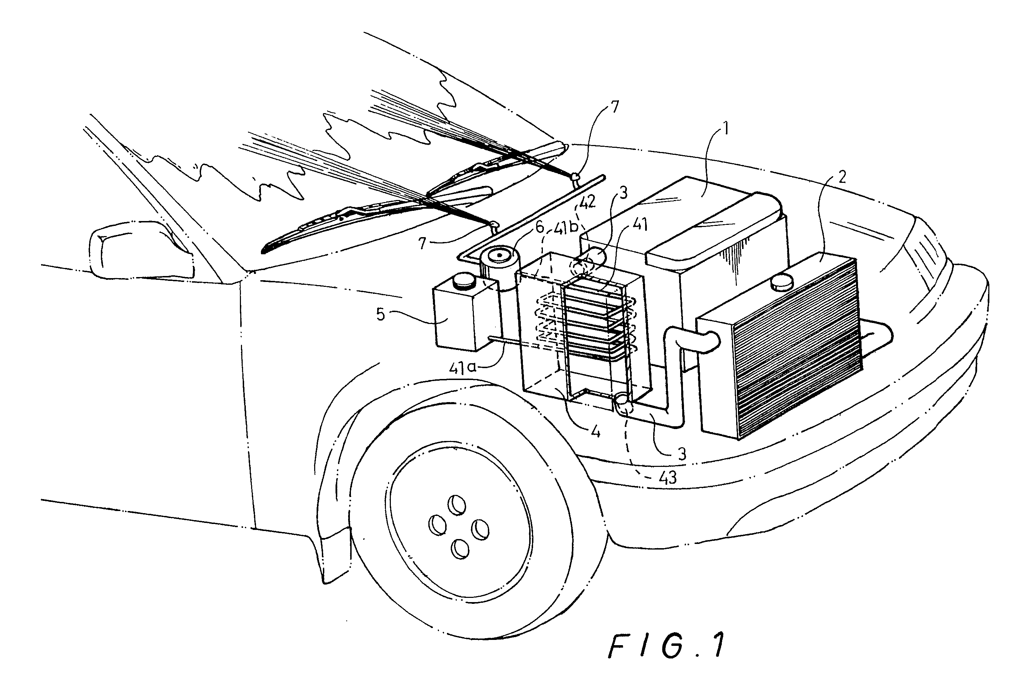

First, as shown in Figure 1, the water warming device for car windshield cleaning comprises a heat exchanging tank 4 and a heat absorbing tube 41 as its main components. The heat exchanging tank 4 is set between the engine 1 and the radiator 2 and connected with outlet tubes 3. The heat absorbing tube 41 is fixed helically in the interior of the tank 4 and connected at one end with a cleaning water container 5 and at the other end with a water pump 6 so that the warmed water can be shot out of a nozzle 7.

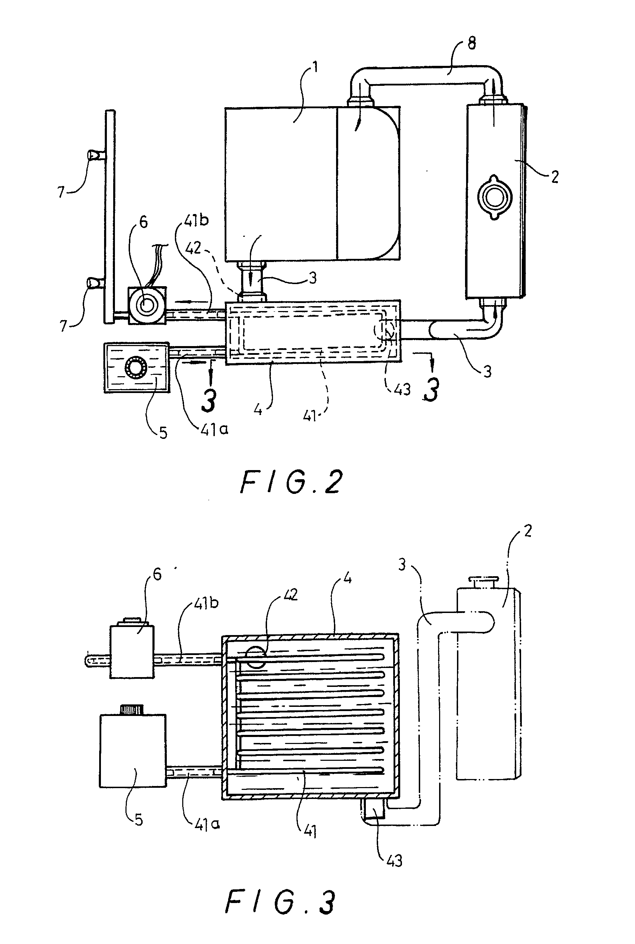

Next, as shown in Figure 2, when the engine 1 is working, the cool water in the radiator 2 circulates from an inlet tube 8 in the wall of the engine 1, and the heated water in the wall of the engine flows out of the outlet tube 3, and in the present invention the outlet tube 3 is first connected with an inlet 42 in the heat exchanging tank 4, therefore, the heated water enters said tank 4 and temporarily accumulates therein and then finally flows out of an outlet 43 of said tank 4 into another outlet tube 3 connected with the radiator 2 so that the heated water circulates back the radiator 2.

Figure 3 shows the structure of the heat exchanging tank 4, which is made of metal, having the inlet 42 at a high level and outlet 43 at a low level. The inlet 42 is for receiving heated water coming from the engine, and the outlet 43 is for sending the heated water back in the radiator 2 through the outlet tube 3, and thereby the water in the radiator 2 can circulate through the engine, returning to the radiator 2 again.

The heat absorbing tube 41 fixed inside said tank 4 is made of a heat transmitting material such as copper, coiling around helically in the interior of said tank 4. The heat absorbing tube 41 has its start point 41a connected with the cleaning water container 5 and its end point 41b connected with the water pump 6. So the pump 6 can suck out the water in the container 5 into the heat absorbing tube 41, wherein the water can be warmed up by the tube 41 absorbing the heat from the heated water coming from the engine 1 and temporarily accumulating in said tank 4. Then the warmed water in the tube 41 can be finally shot out of the nozzle 7 to the windshield.

**Claims**

1. A device for warming windshield washing liquid comprising a heat exchanger connectable respectively to an engine coolant system and to a windshield washing system for transferring heat from the engine coolant to the windshield washing liquid.

2. A device as claimed in claim 1, wherein said device comprises a tank having an inlet and an outlet for connection to one of said systems and tubing disposed in heat transfer relationship to said tank and having an inlet and an outlet for connection to the other of said systems.

3. A device as claimed in claim 2, wherein said tubing is disposed at least partly within said tank.

4. A device as claimed in claim 3, wherein said tubing follows a coiled path in said tank.

5. A device as claimed in claim 2, 3 or 4, wherein said tubing inlet and outlet are connected to said windshield washing system.

6. A water warming device for car windshield cleaning comprising a heat exchanging tank and a heat absorbing tube fixed helically in the heat exchanging tank and connected at one end with a cleaning water container and at the other end with a water pump, said heat exchanging tank having an inlet to receive the heated water coming out of the engine and an outlet to send the heated water temporarily accumulated in said heat exchanging tank, said cleaning water being warmed up by said tube absorbing heat from the heated water while flowing through said tube and then shot out of a nozzle to the windshield by the water pump.

FIG.1

EP 0 454 919 A1

EP 0 454 919 A1

FIG.2

FIG.3

5

European
Patent Office

**EUROPEAN SEARCH
REPORT**

Application Number

**EP 90 30 4845**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 271 821  (MÜLLER)<br>* The whole document * | 1-5 | B 60 S 1/48 |
| Y | | 6 | |
| | — — — | | |
| X | GB-A-1 451 666  (ASSOCIATED ENGINEERING LTD)<br>* Page 2, lines 11-87; page 3, lines 32-69; figures 1,5 * | 1-4 | |
| Y | | 6 | |
| | — — — — — | | |

| | | | TECHNICAL FIELDS SEARCHED (Int. Cl.5) |
|---|---|---|---|
| | | | B 60 S |

The present search report has been drawn up for all claims

| Place of search | Date of completion of search | Examiner |
|---|---|---|
| The Hague | 15 January 91 | VERLEYE J. |